(19) Europäisches Patentamt
European Patent Office
Office européen des brevets

(11) **EP 2 616 867 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **11740929.2**

(22) Anmeldetag: **08.08.2011**

(51) Int Cl.:
***G02B 21/02*** *(2006.01)*

(86) Internationale Anmeldenummer:
**PCT/EP2011/063614**

(87) Internationale Veröffentlichungsnummer:
**WO 2012/034787 (22.03.2012 Gazette 2012/12)**

(54) **MIKROSKOPOBJEKTIV MIT GROSSEM ARBEITSABSTAND**

MICROSCOPE OBJECTIVE HAVING LARGE WORKING DISTANCE

OBJECTIF DE MICROSCOPE À GRANDE DISTANCE DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2010 DE 102010045226**

(43) Veröffentlichungstag der Anmeldung:
**24.07.2013 Patentblatt 2013/30**

(73) Patentinhaber: **Carl Zeiss Microscopy GmbH 07745 Jena (DE)**

(72) Erfinder: **SPRENGER, Joerg 37085 Göttingen (DE)**

(74) Vertreter: **Patentanwälte Geyer, Fehners & Partner mbB Sellierstrasse 1 07745 Jena (DE)**

(56) Entgegenhaltungen:
**US-A1- 2006 092 504**

**Beschreibung**

**Gebiet der Erfindung**

Die Erfindung bezieht sich auf ein mikroskopisches Zoomsystem mit einem Mikroskopobjektiv, bei dem bei guter apochromatischer Korrektion und unter Beibehaltung eines großen Arbeitsabstandes ein möglichst großes Objektfeld in Minimalzoomstellung und die Nutzung einer möglichst großen Apertur bei Maximalzoomstellung gefordert ist.

**Stand der Technik**

Unter den Zoomsystemen im Bereich der Mikroskopie haben sich bislang Variosysteme etabliert, bei denen ein zusätzlicher Objektivwechsel weiterhin möglich bleibt und somit weiterhin ein großer Vergrößerungsbereich zur Verfügung steht. Hierbei haben sich zwei prinzipiell verschiedene Lösungsansätze durchgesetzt:
Zum einen geht es dabei um reine Nachvergrößerungssysteme, die ein primär erzeugtes Zwischenbild aufnehmen und dieses mit einem variablen Abbildungsmaßstab auf einen entsprechenden Empfänger, das kann das Okularzwischenbild oder direkt eine Kamera sein, transferieren. Hierbei stellt das vom entsprechend gewählten Mikroskopobjektiv erfasste Objektfeld das Maximalfeld dar, es entspricht somit bei konstanter Empfängergröße der Minimalvergrößerung. Die Maximalvergrößerung wird vom Nachvergrößerungssystem bestimmt, wobei die förderliche Vergrößerung - je nach Empfänger - berücksichtigt werden muss. Systeme dieser Art bestehen deshalb vorwiegend aus hochaperturigen Mikroskopobjektiven mit relativ großem Objektfeld, jedoch bedingen diese hohen Anforderungen meist Sonderobjektive mit vergrößerter Baulänge.

Das von diesem Mikroskopobjektiv gelieferte primäre Zwischenbild enthält damit bereits alle Informationen und ließe sich auf einem entsprechenden Empfänger vollständig auswerten.

Da die bildseitige numerische Apertur jedoch bereits infolge der geringeren Maßstabzahl hohe Werte erreicht, übersteigt das meist die Auflösung derzeitiger Empfänger. Aus diesem Grund wird mit der Nachvergrößerung das primäre Zwischenbild auf den Empfänger angepasst, was jedoch infolge der konstanten Empfängergröße einen Verlust des Bildbereichs nach sich zieht.

Zusammenfassend stehen bei diesem Ansatz die hohen Endvergrößerungen mit den dafür erforderlichen großen objektseitigen Aperturen im Vordergrund.

Bei dem zweiten Lösungsansatz wird der Zoomgedanke auf das komplette Abbildungssystem bezogen, ähnlich den Zoomobjektiven aus dem Bereich der Photographie. Der Abbildungsmaßstab zwischen Objekt und Bild wird auch ohne Zwischenabbildung variabel gestaltet. Hierbei kommen sowohl Endlich-Endlich-Systeme mit zuschaltbaren Vorsatzobjektiven zum Einsatz als auch afokale Pankratsysteme mit nach Unendlich korrigierten Objektiven und entsprechenden Tubuseinheiten. Charakteristisch für beide Systeme ist, dass die aufgenommene objektseitige Apertur auf die Größe des Objektfeldes besser abgestimmt ist. Grund hierfür ist die meist im Zoomsystem befindliche Blende, so dass das maximale Objektfeld mit einer kleinsten Apertur und das minimale Objektfeld mit höchster Apertur aufgenommen werden. Dadurch sind mit diesem Ansatz hohe Zoomfaktoren ZF > 16x möglich, jedoch meist im Bereich großer bis mittlerer Objektfelder bzw. bei schwachen bis mittleren Vergrößerungen.

Solche Systeme sind in der Stereomikroskopie Stand der Technik. Um aber gleichzeitig an großen Präparaten arbeiten zu können und eine höhere Auflösung - ähnlich klassischer Mikroskope - zu erhalten, muss die Apertur dieser Systeme gesteigert werden. Während für die Stereomikroskopie die Objektive für zwei Teilpupillen korrigiert werden, muss jetzt die Korrektion über die komplette Öffnung erfolgen. Dies bedeutet jedoch gerade bei den geforderten großen Arbeitsabständen hohe Anforderungen an die Korrektur der Objektive, gerade die chromatischen Aberrationen spielen infolge der großen Objektivbrennweite eine entscheidende Rolle.

Während bei Objektiven in einer festen Abbildungskette von einer festen Apertur bei einem gegebenen Objektfeld ausgegangen werden kann, ändern sich hier diese Parameter. Je höher der Zoomfaktor ausgelegt wird, umso unterschiedlicher sind die Anforderungen für die Korrektion des Objektivs. Einen wesentlichen Einfluss auf die Korrektur des Gesamtsystems hat ebenfalls der Verlauf der Pupillenlage während des Zoomens. Infolge dieser Pupillenlage entstehen gerade für die großen Objektfelder unterschiedliche Feldaberrationen.

In US 2006/0092504 A1 ist ein Mikroskopsystem beschrieben, das ein Objektiv und ein dem Objektiv nachgeordnetes afokales System mit variabler Vergrößerung aufweist und die Bedingungen erfüllt

$$2 \times NA(ob) \times FL(ob) \geq 30$$

$$6 \leq Lexz / X \leq 10$$

mit NA(ob) der maximalen Numerischen Apertur des Objektivs, FL(ob) der Brennweite des Objektivs, und Lexz dem Abstand von einer Objektoberfläche zu dem entferntesten Ende des afokalen Systems. Für die Ausführung des Objektivs sind konkrete Beispiele angegeben.

**Beschreibung der Erfindung**

Auf die letztgenannte Problematik bezieht sich die vorliegende Erfindung, und es liegt der Erfindung die Aufgabe zu Grunde, ein Mikroskopobjektiv zu schaffen, welches in Verbindung mit mikroskopischen Zoomsystemen bei möglichst großem Arbeitsabstand sowohl ein großes Objektfeld in der Minimalzoomstellung als auch bei maximaler Zoomstellung eine entsprechend große Apertur aufnehmen kann und dabei die für mikroskopische Anwendungen höchster Ansprüche erforderliche apochromatische Korrektion erreicht.

Erfindungsgemäß besteht ein Mikroskopobjektiv, das diesen Anforderungen genügt, aus drei optischen Gliedern G1, G2 und G3, wobei diese von der Objektebene ausgehend wie folgt charakterisiert sind:

- das erste Glied G1 besteht aus drei miteinander verkitteten Linsen und erfüllt die Brennweitenbedingung $f'_{Obj} < f'_{G1} < 3f'_{Obj}$,
- das zweite Glied G2 besteht aus drei miteinander verkitteten Linsen und erfüllt die Brennweitenbedingung $2.5 * f'_{Obj} < |f'_{G2}| < 8.5 * f'_{Obj}$, und
- das dritte Glied G3 besteht aus drei miteinander verkitteten Linsen und erfüllt die Brennweitenbedingung $|f'_{G3}| > 5* f'_{Obj}$.

Dabei ist für das erste Glied G1 zunächst eine positive Linse aus einem hoch brechenden Material vorgesehen, gefolgt von einer negativen Linse mit im Vergleich dazu geringerer Brechzahl.

Der Erfindung liegt folgender Gedanke zugrunde: Will man einen großen Arbeitsabstand realisieren, greift man für gewöhnlich auf Retrofokus-Konstruktionen zurück. Hierbei erfolgen zuerst eine Aufweitung des Strahlenbündels und ein anschließendes Fokussieren in die Objektebene. Durch diese Aufweitung des Bündels werden aber in den kleinen Vergröße rungsstellungen die bereits großen Feldwinkel noch weiter vergrößert, so dass dieser übliche und dem Fachmann an sich nahe liegender Lösungsweg nicht zur Lösung der Aufgabe führen konnte.

Eine andere Möglichkeit für die Ebnung des Bildfeldes wurde, wie bereits erwähnt, dadurch gefunden, dass von der Objektebene ausgehend zunächst eine positive Linse aus einem hoch brechenden Material vorgesehen wurde, gefolgt von einer negativen Linse mit möglichst geringer Brechzahl.

**Kurze Beschreibung der Zeichnungen**

Die Erfindung wird nachfolgend anhand eines Ausführungsbeispieles näher erläutert. In den zugehörigen Zeichnungen zeigen

Fig.1  in einer Übersichtsdarstellung das Zusammenwirken des erfindungsgemäßen Objektivs, das die konstruktiven Merkmale nach Tabelle 1 aufweist, und eines Zoomsystems mit den konstruktiven Merkmalen nach Tabelle 2,
Fig.2  das Objektiv als Einzeldarstellung bei der Einstellung auf möglichst großes Objektfeld in Minimalzoomstellung,
Fig.3  die chromatische Längsabweichung des erfindungsgemäßen Objektivs bei der Einstellung auf größtmöglichstes Objektfeld,
Fig.4  Bildfeldkrümmungs- und Verzeichnungsdarstellung bei der Wellenlänge 546 $\mu$m für das maximale Objektfeld,
Fig.5  das Objektiv als Einzeldarstellung bei der Einstellung auf möglichst große Apertur bei Maximalzoomstellung,
Fig.6  die chromatische Längsabweichung des erfindungsgemäßen Objektivs bei der Einstellung auf größtmöglichste objektseitige Apertur,
Fig.7  Bildfeldkrümmungs- und Verzeichnungsdarstellung bei der Wellenlänge 546 $\mu$m für die Einstellung auf maximale Apertur

**Ausführliche Beschreibung der Zeichnungen**

Im dem hier gewählten konkreten Ausführungsbeispiel wurden die drei Gruppen G1, G2 und G3 als Kittglieder umgesetzt, so dass eine kompakte und zentrierunempfindliche Lösung gefunden wurde. Durch die Ausführung der Gruppe G2 als dreifaches Kittglied konnte auf stärker gekrümmte Flächen verzichtet und so die Herstellbarkeit vereinfacht werden. Außerdem wurde bei der Glasauswahl sowohl auf die RoHS (**R**estriction **o**f **H**arzardous **S**ub-stances)-Konformität geachtet, als auch eine hohe Transmission bis in den ultravioletten Spektralbereich bei 365 nm > 30% erreicht, was insbesondere für den Einsatz in der Fluoreszenzmikrokopie einen wichtigen Parameter darstellt.

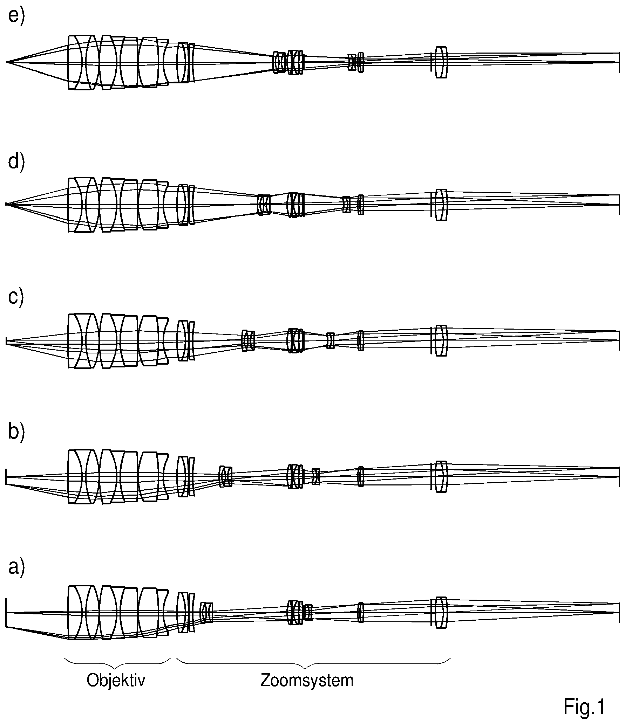

In Fig.1a bis Fig.1e ist das erfindungsgemäße Objektiv in Verbindung mit einem Zoomsystem in verschiedenen Zoomstellungen dargestellt. Dabei zeigt Fig.1a die Minimalzoomstellung und das bei dieser Einstellung erzielte sehr große Objektfeld, aus Fig.1e dagegen ist die bei maximaler Zoomstellung aufnehmbare große Apertur ersichtlich. Fig.1b bis Fig.1d zeigen Zwischenstellungen.

Das erfindungsgemäße Objektiv hat eine Brennweite von f'= 72.75 und eine Öffnungszahl von 1.8, es weist die Konstruktionsdaten nach folgender Tabelle 1 auf:

| Fläche FL | Krümmungsradius r | Dicke D | Brechzahl $n_e$ | Abbezahl $v_e$ |
|---|---|---|---|---|
| OBJ | INF | 62.77 | | |
| 1 | 542.924 | 14.50 | 1.80832 | 46.3 |
| 2 | -48.964 | 3.50 | 1.61664 | 44.3 |
| 3 | 65.605 | 13.90 | 1.43985 | 94.6 |
| 4 | -69.281 | 0.15 | | |
| 5 | 112.101 | 18.00 | 1.43985 | 94.6 |
| 6 | -51.629 | 3.50 | 1.61664 | 44.3 |
| 7 | 66.089 | 18.00 | 1.62033 | 63.1 |
| 8 | -481.872 | 1.59 | | |
| 9 | 72.816 | 20.20 | 1.79007 | 43.8 |
| 10 | -112.760 | 4.00 | 1.51045 | 61.0 |
| 11 | 40.252 | 15.00 | | |

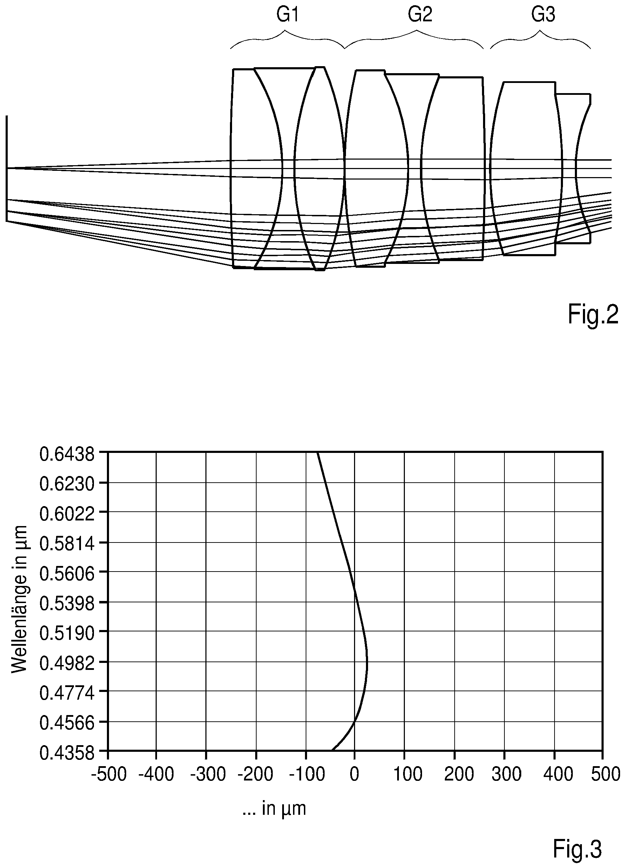

Damit kann die Bildfeldebnung auch für Minimalzoomstellung und großes Objektfeld, wie in Fig.2 gesondert dargestellt, auf die erste Gruppe G1 und letzte Gruppe G3 verteilt werden. Zur Korrektion der vorrangig in der hohen Vergrößerung auftretenden chromatischen Längsaberrationen können dann Fluorkrongläser mit großer relativer Teildispersion eingesetzt werden, die die Petzvalsumme zwar wieder negativ beeinflussen, aufgrund der Vorkehrung jedoch keinen Schaden anrichten.

Wie im Linsenschnitt für das große Objektfeld (vgl. Fig.2) deutlich zu sehen ist, entstehen bei diesem Verlauf des Hauptstrahls große chromatische Queraberrationen, die im ersten Kittglied durch die Kombination eines Flintglases mit einem Fluorkronglas für einen großen Wellenlängenbereich für sich beseitigt werden. Damit können die Farbquerfehler und die Astigmatismusanteile, welche hier im kleinen Vergrößerungsbereich entstehen, in dieser Gruppe nahezu beseitigt werden.

Fig.3 zeigt die Fokusablagen für unterschiedliche Wellenlängen, infolge der hohen bildseitigen Apertur in dieser Stellung beträgt die Tiefeschärfe hier nur 0.23 mm.

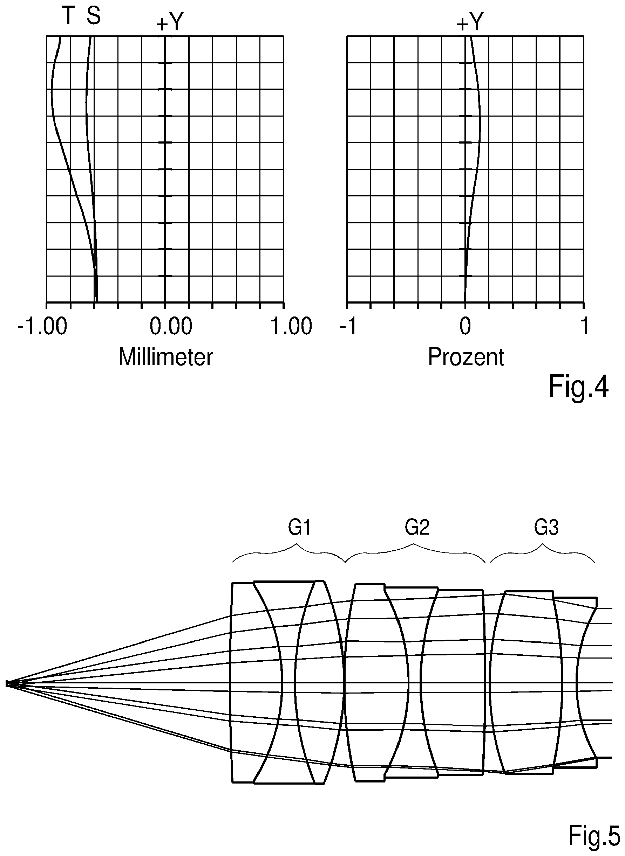

Fig.4 zeigt auf der linken Seite die tangentiale und sagittale Bildschale für den Zwischenbilddurchmesser 23 mm, auf der rechten Seite ist die Verzeichnung über das Bildfeld aufgetragen. Man erkennt, dass das maximale Objektfeld mit einem Durchmesser von 32 mm nahezu verzeichnungsfrei abgebildet wird.

Wie aus Fig.5 ersichtlich, sind für die höheren Vergrößerungen und größeren Aperturen sowohl die sphärischen Aberrationen als auch die chromatischen Längsaberrationen wesentlich. Die Korrektion dieser Größen erfolgt vorrangig in Gruppe G2 und Gruppe G3. Die chromatische Längsaberration wird dabei in Gruppe G2 durch die Kombination eines Fluorkronglases mit einem Kurzflintsonderglas und in Gruppe G3 durch den Einsatz eines Flintglases in der positiven Linse erreicht.

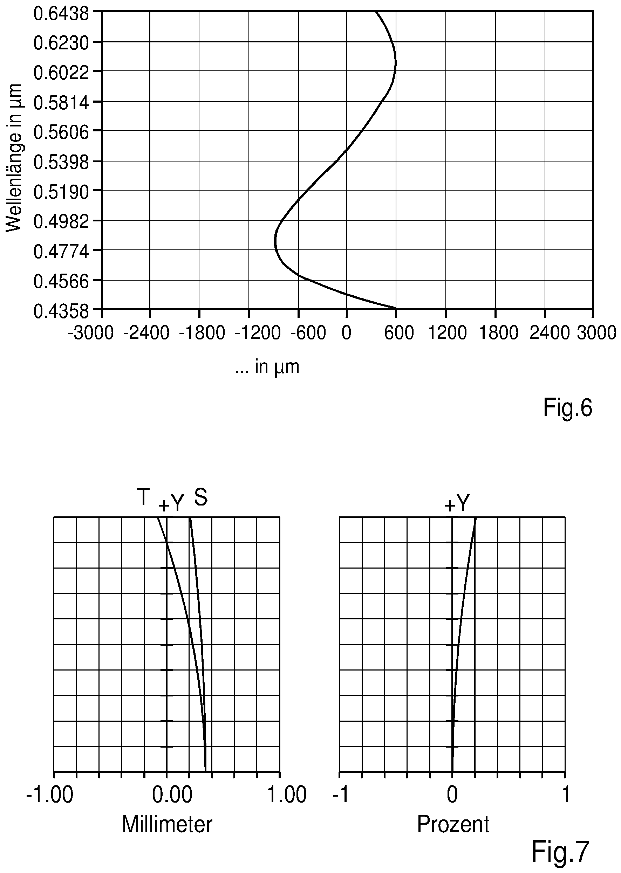

In Fig.6 ist die chromatische Längsabweichung bei jetzt voller Pupille dargestellt. Die apochromatische Korrektion von 436 nm bis 644 nm ist am Kurvenverlauf deutlich zu erkennen.

Fig.7 zeigt wiederum die Darstellung der Bildfeldkrümmung und der Verzeichnung über das Bildfeld bei der Wellenlänge 546 nm.

Das beispielhaft mit dem Objektiv verwendete Zoomsystem hat eine Vergrößerung von 20x und weist die Konstruktionsdaten nach folgender Tabelle 2 auf:

| Fläche FL | Krümmungsradius r | Dicke D | Brechzahl $n_e$ | Abbezahl $v_e$ |
|---|---|---|---|---|
| 1 | 91.11357 | 8.500 | 1.49845 | 81.0 |
| 2 | -71.14175 | 3.500 | 1.65803 | 39.5 |

(fortgesetzt)

| Fläche FL | Krümmungsradius r | Dicke D | Brechzahl $n_e$ | Abbezahl $v_e$ |
|---|---|---|---|---|
| 3 | -183.02273 | 0.100 | | |
| 4 | 158.22772 | 4.500 | 1.51872 | 64.0 |
| 5 | 153.47275 | 6.6229 | | |
| 6 | 46.10683 | 2.500 | 1.43985 | 94.6 |
| 7 | 22.24624 | 4.100 | | |
| 8 | -30.07461 | 2.000 | 1.65391 | 55.6 |
| 9 | 18.58995 | 3.800 | 1.74341 | 32.0 |
| 10 | 88.60515 | 76.40868 | | |
| 11 | 30.46464 | 4.500 | 1.48794 | 84.1 |
| 12 | -262.91053 | 0.100 | | |
| 13 | 92.93645 | 2.500 | 1.88815 | 40.5 |
| 14 | 20.64110 | 5.200 | 1.53019 | 76.6 |
| 15 | -95.64532 | 0.100 | | |
| 16 | 68.18341 | 3.500 | 1.88815 | 40.5 |
| 17 | 309.33567 | 1.000 | | |
| AB 18 | Unendlich | 2.08654 | | |
| 19 | -32.67878 | 4.000 | 1.74341 | 32.0 |
| 20 | -14.11981 | 2.000 | 1.62033 | 63.1 |
| 21 | 38.55268 | 47.71906 | | |
| 22 | 63.50711 | 2.500 | 1.72539 | 34.5 |
| 23 | 40.87979 | 3.200 | 1.43985 | 94.6 |
| 24 | -178.06438 | | | |

**Patentansprüche**

1. Mikroskopisches Zoomsystem, umfassend ein Mikroskopobjektiv mit großem Arbeitsabstand und einen dem Mikroskopobjektiv nachfolgenden Zoom, in welchem eine Pupillenbegrenzung erfolgt und dabei eine apochromatische Korrektion erreicht wird,

    - das Mikroskopobjektiv bestehend aus drei optischen Gliedern G1, G2 und G3, wobei diese von der Objektebene ausgehend wie folgt angeordnet und charakterisiert sind:
    - das erste Glied G1 besteht aus drei miteinander verkitteten Linsen und erfüllt die Brennweitenbedingung $f'_{Obj} < f'_{G1} < 3f'_{Obj}$, wobei für das erste Glied G1 zunächst eine positive Linse aus einem hoch brechenden Material vorhanden ist, gefolgt von einer negativen Linse mit im Vergleich dazu geringerer Brechzahl,
    - das zweite Glied G2 besteht aus drei miteinander verkitteten Linsen und erfüllt die Brennweitenbedingung $2.5* f'_{Obj} < |f'_{G2}| < 8.5 * f'_{Obj}$, und
    - das dritte Glied G3 besteht aus zwei miteinander verkitteten Linsen und erfüllt die Brennweitenbedingung $|f'_{G3}| > 5 * f'_{Obj}$.

2. Mikroskopisches Zoomsystem nach Anspruch 1, umfassend ein Mikroskopobjektiv mit einer Brennweite von f'= 72.75, einer Öffnungszahl von 1.8 und Konstruktionsdaten nach folgender Tabelle:

| Fläche FL | Krümmungsradius r | Dicke D | Brechzahl $n_e$ | Abbezahl $v_e$ |
|---|---|---|---|---|
| OBJ | INF | 62.77 | | |
| 1 | 542.924 | 14.50 | 1.80832 | 46.3 |
| 2 | -48.964 | 3.50 | 1.61664 | 44.3 |
| 3 | 65.605 | 13.90 | 1.43985 | 94.6 |
| 4 | -69.281 | 0.15 | | |
| 5 | 112.101 | 18.00 | 1.43985 | 94.6 |
| 6 | -51.629 | 3.50 | 1.61664 | 44.3 |
| 7 | 66.089 | 18.00 | 1.62033 | 63.1 |
| 8 | -481.872 | 1.59 | | |
| 9 | 72.816 | 20.20 | 1.79007 | 43.8 |
| 10 | -112.760 | 4.00 | 1.51045 | 61.0 |
| 11 | 40.252 | 15.00 | | |

## Claims

1. Microscopic zoom system, comprising a microscope objective with a large working distance and a zoom following the microscope objective, in which a pupil limitation takes place and an apochromatic correction is achieved,

   - the microscope objective consisting of three optical elements G1, G2 and G3, wherein the latter are arranged and characterized starting from the object plane as follows:
   - the first element G1 consists of three lenses cemented together and satisfies the focal length condition $f'_{obj} < f'_{G1} < 3f'_{obj}$, wherein, for the first element G1, firstly a positive lens made of a highly refractive material is present, followed by a negative lens with a comparatively lower refractive index,
   - the second element G2 consists of three lenses cemented together and satisfies the focal length condition $2.5 * f'_{obj} < |f'_{G2}| < 8.5 * f'_{obj}$, and
   - the third element G3 consists of two lenses cemented together and satisfies the focal length condition $|f'_{G3}| > 5 * f'_{obj}$.

2. Microscopic zoom system according to claim 1, comprising a microscope objective with a focal length of f'= 72.75, an aperture number of 1.8 and design data according to the following table:

| Surface FL | Radius of curvature r | Thickness D | Refractive index $n_e$ | Abbe number $v_e$ |
|---|---|---|---|---|
| OBJ | INF | 62.77 | | |
| 1 | 542.924 | 14.50 | 1.80832 | 46.3 |
| 2 | -48.964 | 3.50 | 1.61664 | 44.3 |
| 3 | 65.605 | 13.90 | 1.43985 | 94.6 |
| 4 | -69.281 | 0.15 | | |
| 5 | 112.101 | 18.00 | 1.43985 | 94.6 |
| 6 | -51.629 | 3.50 | 1.61664 | 44.3 |
| 7 | 66.089 | 18.00 | 1.62033 | 63.1 |
| 8 | -481.872 | 1.59 | | |
| 9 | 72.816 | 20.20 | 1.79007 | 43.8 |
| 10 | -112.760 | 4.00 | 1.51045 | 61.0 |

(continued)

| Surface FL | Radius of curvature r | Thickness D | Refractive index $n_e$ | Abbe number $v_e$ |
|---|---|---|---|---|
| 11 | 40.252 | 15.00 | | |

## Revendications

1. Système de zoom microscopique, comprenant un objectif de microscope à grande distance de travail et un zoom après l'objectif de microscope, dans lequel une limitation de pupille se produit et une correction apochromatique est réalisée,

   - l'objectif de microscope consistant en trois éléments optiques G1, G2 et G3, ces derniers étant agencés et caractérisés en partant du plan d'objet comme suit :
   - le premier élément G1 consiste en trois lentilles cimentées ensemble et satisfait la condition de longueur focale $f'_{obj} < f'_{G1} < 3f'_{obj}$, où, pour le premier élément G1, une lentille positive réalisée en un matériau hautement réfractif est d'abord présente, suivie d'une lentille négative d'un indice de réfraction comparativement inférieur,
   - le deuxième élément G2 consiste en trois lentilles cimentées ensemble et satisfait la condition de longueur focale $2,5 * f'_{obj} < |f'_{G2}| < 8,5 * f'_{obj}$ et
   - le troisième élément G3 consiste en deux lentilles cimentées ensemble et satisfait la condition de longueur focale $|f'_{G3}| > 5 * f'_{obj}$.

2. Système de zoom microscopique selon la revendication 1, comprenant un objectif de microscope d'une longueur focale de f'= 72,75, d'un indice d'ouverture de 1,8 et de données de conception telles qu'indiquées dans le tableau suivant :

| Surface FL | Rayon de courbure r | Epaisseur D | Indice de réfraction $n_e$ | Nombre d'Abbe $v_e$ |
|---|---|---|---|---|
| OBJ | INF | 62,77 | | |
| 1 | 542,924 | 14,50 | 1,80832 | 46,3 |
| 2 | -48,964 | 3,50 | 1,61664 | 44,3 |
| 3 | 65,605 | 13,90 | 1,43985 | 94,6 |
| 4 | -69,281 | 0,15 | | |
| 5 | 112,101 | 18,00 | 1,43985 | 94,6 |
| 6 | -51,629 | 3,50 | 1,61664 | 44,3 |
| 7 | 66,089 | 18,00 | 1,62033 | 63,1 |
| 8 | -481,872 | 1,59 | | |
| 9 | 72,816 | 20,20 | 1,79007 | 43,8 |
| 10 | -112,760 | 4,00 | 1,51045 | 61,0 |
| 11 | 40,252 | 15,00 | | |

e)

d)

c)

b)

a)

Objektiv    Zoomsystem

Fig.1

8

G1    G2    G3

Fig.2

Fig.3

T S     +Y          +Y

-1.00     0.00     1.00
Millimeter

-1          0          1
Prozent

Fig.4

G1          G2          G3

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060092504 A1